# FASCICULE DE BREVET EUROPEEN

(11) **EP 2 243 315 B1**
(45) Date de publication et mention de la délivrance du brevet: **08.03.2017**
(21) Numéro de dépôt: 09706410.9
(22) Date de dépôt: 19.01.2009
(51) Int. Cl.: H04W 16/32, H04W 52/02, H04W 48/14

(54) **CONTROLE DE L'ACTIVITE DE CELLULES RADIO**
STEUERUNG EINER FUNKZELLENAKTIVITÄT
CONTROL OF RADIO CELLS ACTIVITY

(30) Priorité: 01.02.2008 FR 0850658
(43) Date de publication de la demande: 27.10.2010
(73) Titulaire: Orange, 75015 Paris (FR)
(72) Inventeur: BOUGUEN, Yannick, F-13010 Marseille (FR); WOLFF, François-Xavier, F-75015 Paris (FR)
(74) Mandataire: Cabinet Plasseraud
(86) Numéro de dépôt international: PCT/FR2009/050066
(87) Numéro de publication internationale: WO 2009/095576

(56) Documents cités:
- WO-A-2007/136339
- US-A1- 2007 097 939

## Description

La présente invention concerne les réseaux cellulaires, et plus particulièrement le contrôle de l'activité de certaines cellules dans un réseau cellulaire, notamment lorsque le réseau cellulaire considéré est composé de cellules classiques et de cellules de type 'cellule à accès restreint'.

Une "cellule à accès restreint" correspond à une cellule radio qui est généralement localisée de sorte à couvrir un lieu privé ou semi-privé comme une entreprise ou encore un lieu d'habitation tel qu'un appartement ou un immeuble.

Il peut être avantageux de prévoir d'installer de telles cellules pour offrir un accès radio plus performant à un groupe restreint d'utilisateurs qui sont abonnés à cet accès. Ainsi, on peut envisager d'offrir un accès radio restreint à une famille qui a souscrit un tel abonnement et dans l'appartement de laquelle est située une station de base spécifiquement adaptée pour couvrir le lieu d'habitation de cette famille. De nombreux autres scenarii peuvent être également envisagés dans l'utilisation de telles stations de bases spécifiques permettant d'offrir une cellule radio à accès restreint.

Du fait que l'accès à de telles cellules est restreint, les abonnés à une cellule de ce type peuvent avoir un accès radio de très bonne qualité, avec des débits de transmission importants. Ils peuvent donc bénéficier de services de télécommunications qui leur seraient plus difficilement accessibles via un réseau cellulaire classique qui couvre ce même lieu.

Une telle cellule à accès restreint peut correspondre à une femto cellule, c'est-à-dire une cellule radioélectrique qui est plus petite qu'une cellule classique offerte dans un réseau de télécommunications cellulaire classique, comme par exemple un réseau cellulaire de type GSM (pour 'Global System for Mobile communication')' ou encore UMTS (pour 'Universal Mobile Telecommunication System'). L'installation de telles petites cellules radio, permet dans certains cas d'améliorer la couverture radio offerte par des réseaux cellulaires classiques.

Afin de fournir une telle cellule à accès restreint, il est prévu d'installer une station de base adaptée, ci-après référencée par les termes 'entité de gestion de cellule'.

Il convient de noter qu'une entité de gestion de cellule peut être installée de manière indépendante à d'autres entités de gestion de cellules de base, l'objectif visé étant d'offrir une couverture radio adaptée aux habitants du lieu considéré. Ainsi, contrairement à d'autres réseaux de télécommunications cellulaires qui eux visent à offrir une couverture radio continue sur un territoire large, comme un territoire national, l'installation de ces entités de gestion de cellules peut correspondre à un déploiement non-coordonné des différentes cellules à accès restreint gérées, puisque la couverture radio attachée à une telle entité de gestion de cellule peut être gérée de manière autonome par rapport à la couverture radio attachée à une entité de gestion de cellule voisine. Les caractéristiques d'un réseau de télécommunication cellulaire classique ne peuvent donc pas aisément être appliquées à une cellule à accès restreint.

Le document D1 US 2007-097939 divulgue des procédés et appareils permettant la configuration d'une station de base radio femto.

Il convient de noter que l'on déplore aujourd'hui une importante consommation électrique dans les réseaux de télécommunications cellulaires au niveau des équipements de passerelles (ou 'Home Gateway') utilisés pour fournir un service de type DSL (pour 'Digital Subscriber Line') à des abonnés.

Pour des raisons similaires, le déploiement en masse de cellules à accès restreint risque d'entraîner une consommation électrique fortement dommageable. En effet, il est fort probable que les abonnés aient une regrettable tendance à ne pas mettre hors-tension leur entité de gestion de cellule lorsqu'ils quitteront le lieu couvert par cette dernière.

Par ailleurs, un déploiement en masse de telles cellules à accès restreint peut provoquer des interférences nuisibles sur des cellules radio d'un réseau cellulaire mobile qui sont proches de cellules à accès restreint. De plus, l'entité de gestion de cellule en charge d'une cellule à accès restreint peut être en communication avec une entité de réseau du réseau cellulaire et cette communication utilise alors des ressources en communication qui peuvent fortement affecter les ressources en communication globales d'un tel réseau cellulaire.

Il est fort probable que le nombre d'entités de gestion de cellules, déployées de manière non coordonnée, soit un nombre très important (de l'ordre du million au moins, pour un pays comme la France). Ainsi, les effets négatifs cités ci-avant qui peuvent être engendrés par le déploiement de telles cellules à accès restreint pourraient avoir un impact très important.

La présente invention vise à améliorer la situation.

Un premier aspect de la présente invention propose un procédé de contrôle dans un réseau cellulaire comprenant :
- une première entité de gestion de cellule adaptée pour gérer une première cellule radio qui peut être dans un état actif ou dans un état inactif ;
- une seconde entité de gestion de cellule adaptée pour gérer au moins une seconde cellule radio ; et
- au moins une entité de contrôle adaptée pour contrôler la première entité de gestion de cellule ;
lesdites première et seconde cellules radio se recouvrant au moins partiellement géographiquement ;
ledit procédé comprenant les étapes suivantes au niveau de l'entité de contrôle :
/1/ obtenir une information de présence relative à la présence d'au moins un terminal dans une zone de voisinage radio de la première cellule ;
/2/ décider un état d'activité de la première cellule en fonction de ladite information de présence ;
ladite zone de voisinage radio de la première cellule comprenant au moins la seconde cellule.

Aucune limitation n'est attachée au type de terminal pour lequel un procédé selon un mode de réalisation de la présente invention est adapté. Un tel terminal peut notamment être un terminal mobile.

Dans un tel réseau cellulaire, il est possible d'offrir à un terminal dans une localisation donnée, comme par exemple dans son immeuble d'habitation, à la fois une couverture radio issue d'un réseau cellulaire classique tel qu'un réseauLTE (pour 'Long Term Evolution') en cours de spécification au sein du groupe 3GPP (pour '3rd Generation Partnership Project'), auquel appartient la seconde cellule radio, et une couverture radio autre, issue d'une entité de gestion de cellule qui lui permette par exemple d'établir des communications de meilleure qualité, et/ou avec des débits importants, sans problème de capacité, et de ce fait qui lui permette d'accéder à d'autres services de communication.

Aucune limitation quant à la taille de la première cellule n'est attachée à la présente invention. En effet, la première cellule peut notamment être une femto cellule ou encore une macro cellule.

Cette architecture de réseau trouve avantageusement à être appliquée dans le cas où la première cellule est une cellule à accès restreint d'abonnés. Par exemple, on peut envisager que cette première cellule est une cellule fournie par une entité de gestion de cellule dédiée à la couverture radio spécifique d'un appartement ou d'une habitation privée. Dans ces conditions, on peut prévoir que seul un groupe restreint d'abonnés peut utiliser l'accès à cette cellule. Cette caractéristique est importante dans le sens où elle permet à ce groupe restreint d'abonnés de bénéficier d'un accès radio de bonne qualité.

Dans une telle architecture, il est prévu de réduire les impacts divers que peut avoir la première cellule sur l'environnement, en limitant la consommation électrique de la première entité de gestion de cellule, les impacts sur le réseau auquel appartient la seconde cellule en limitant les interférences entre les première et seconde cellules. Ces impacts sont limités puisque les caractéristiques énoncées ci-avant permettent de limiter l'activité de la première cellule aux périodes pendant lesquelles au moins un des abonnés autorisés à y accéder se trouvent dans la zone de voisinage radio immédiat de cette première cellule.

De plus, le recouvrement au moins partiel d'une zone géographique doublement couverte, à la fois par la couverture de la première cellule et par celle de la seconde cellule permet avantageusement d'utiliser la seconde cellule pour détecter la présence d'un terminal dans cette zone. Ainsi, lorsqu'un terminal d'abonné est mis sous tension dans la zone géographique doublement couverte, et que la première cellule est dans l'état inactif, la présence de ce terminal peut alors être détectée sur la base de la seconde cellule et de ce fait peut conduire à l'activation de la première cellule de manière pertinente, le cas échéant.

La présente invention trouve une application avantageuse dans le contexte d'un réseau de type LTE.

L'entité de contrôle peut décider d'un changement état d'activité depuis un état inactif à un état actif pour la première cellule, lorsque l'information de présence indique qu'au moins un terminal est présent dans la zone de voisinage radio de la première cellule.

En procédant ainsi, on est en mesure d'offrir une couverture radio de la première cellule dès qu'un terminal pourrait en avoir besoin.

L'entité de contrôle peut décider d'un changement état d'activité depuis un état actif à un état inactif pour la première cellule, lorsque l'information de présence indique qu'aucun terminal n'est présent dans la zone de voisinage radio de la première cellule.

Ainsi, la première cellule étant désactivée lorsqu'aucun terminal n'est présent, l'entité de gestion de cellule correspondante consomme de ce fait moins d'énergie dès qu'elle n'est plus susceptible d'être utile.

L'entité de contrôle peut recevoir un message d'indication de présence, respectivement un message d'indication d'absence, depuis un terminal détectant qu'il entre dans, respectivement sort de, la zone de voisinage radio de la première cellule.

Ainsi, l'entité de contrôle peut être informée de la présence ou non d'au moins un terminal dans la zone de voisinage radio de la première cellule par le ou les terminaux eux-mêmes, par traitement de ces informations reçues depuis les terminaux.

Le procédé mis en oeuvre au niveau d'un terminal selon un mode de réalisation peut à la fois être effectué lorsque le terminal est dans un état actif, ou même lorsqu'il est dans un état de veille.

On peut envisager, en effet, qu'un terminal abonné à l'accès radio de cette première cellule dispose préalablement d'une liste d'informations relatives à des cellules radio voisines de la première cellule (ces informations pouvant lui être fournies par exemple au moment de l'abonnement à l'accès de cette cellule et qui pourraient être mises à jour par le réseau) et qu'il soit en mesure de déterminer s'il entre ou sort de cette zone de voisinage radio de cette première cellule en comparant cette liste d'informations dont il dispose préalablement avec des indications qu'il reçoit d'une ou de plusieurs cellules lorsqu'il est situé dans la couverture de cette cellule ou de cette pluralité de cellules. Il est avantageux de prévoir que l'indication de présence ou d'absence d'un terminal de la zone de voisinage radio de la première cellule provienne du terminal lui-même puisqu'il est classiquement en charge d'effectuer des mesures radio sur le ou les signaux reçus depuis les cellules dans lesquelles il se situe.

Dans un mode de réalisation de la présente invention, l'entité de contrôle est en charge du contrôle à la fois de la première et de la seconde cellule, et le message d'indication de présence ou d'absence est transmis par le terminal à destination de cette entité de contrôle.

On peut également prévoir qu'une autre entité de contrôle soit en charge du contrôle de la seconde cellule, et que, dans ce cas, le message d'indication de présence ou d'absence est transmis par le terminal à destination de cette autre entité de contrôle, cette autre entité de contrôle transmettant ce message d'indication à destination de l'entité de contrôle en charge du contrôle de la première cellule.

Il convient de préciser ici que les termes 'entité de contrôle' ne désignent pas dans tous les cas une entité adaptée pour mettre en oeuvre les mêmes fonctionnalités. En effet, l'entité de contrôle associée à l'entité de gestion de la cellule à accès restreint est adaptée pour contrôler l'état d'activité d'une cellule à accès restreint, alors qu'une entité de contrôle contrôlant des entités de gestion de cellule classique n'a pas nécessairement cette capacité.

En outre, l'entité de contrôle associée à l'entité de gestion de la cellule à accès restreint peut être une entité qui est dédiée au contrôle de la cellule considérée selon un mode de réalisation de la présente invention.

Ainsi, dans le contexte de la présente invention, une entité de contrôle peut correspondre à une entité du réseau coeur ou encore à une entité dédiée au contrôle d'activité de cellule selon un mode de réalisation de la présente invention.

Un deuxième aspect de la présente invention propose un procédé de contrôle dans un réseau cellulaire comprenant :
- une première entité de gestion de cellule adaptée pour gérer une première cellule radio qui peut être dans un état actif ou dans un état inactif ;
- une seconde entité de gestion de cellule adaptée pour gérer au moins une seconde cellule radio ; et
- au moins une entité de contrôle adaptée pour contrôler la première entité de gestion de cellule ;
lesdites première et seconde cellules radio se recouvrant au moins partiellement géographiquement ;
ledit procédé comprenant les étapes suivantes au niveau de la première entité de gestion de cellule :
/1/ recevoir un message d'activation, respectivement de désactivation, depuis l'entité de contrôle ;
/2/ mettre dans un état actif, respectivement dans un état inactif, la première cellule.

Ainsi, on est en mesure d'optimiser la consommation d'énergie de la première entité de gestion de cellule et de réduire l'impact de cette première cellule sur les autres cellules qui lui sont proches géographiquement, et notamment sur la seconde cellule.

Lorsque la première cellule est dans un état actif, une interface radio entre un terminal et la première entité de gestion de cellule permet une communication du terminal, et, lorsque la première cellule est dans un état inactif, aucune interface radio entre un terminal et la première entité de gestion de cellule ne permet une communication du terminal.

Ainsi, lorsque la première cellule est inactive, on peut éviter la consommation d'énergie liée au maintient de la cellule en activité, c'est-à-dire notamment liée à l'émission de signaux radio comme celle du canal pilote de la cellule.

Lorsque la première cellule est dans un état actif, une communication est établie entre une station de base gérant la première cellule et une entité de réseau; et lorsque la première cellule est dans un état inactif, aucune communication n'est établie entre cette station de base et l'entité de réseau.

Il convient de noter ici que l'entité de contrôle au sens de la présente invention correspond à la mise en oeuvre du contrôle de l'activité d'une cellule. A ce titre, on peut prévoir que cette entité de contrôle se situe n'importe où dans l'architecture du réseau considéré. Cette entité de contrôle peut par exemple être située au niveau d'une entité de réseau qui gère les communications des terminaux du réseau.

Il en est de même pour la première entité de gestion de cellule. Ainsi, cette première entité de gestion de cellule met au moins en oeuvre les étapes correspondant au procédé de contrôle selon un mode de réalisation de l'invention. Mais elle peut en outre correspondre à la station de base gérant la première cellule ou encore être une entité distincte de cette station de base.

Quelque soit l'architecture du réseau considéré, ici on vise à éviter la consommation de ressource de transmission liée à une communication qui s'avère alors inutile entre la station de base et l'entité de réseau, lorsque la première cellule est dans l'état inactif.

Un troisième aspect de la présente invention propose un procédé de contrôle d'un terminal dans un réseau cellulaire comprenant :
- une première entité de gestion de cellule adaptée pour gérer une première cellule radio qui peut être dans un état actif ou dans un état inactif ;
- une seconde entité de gestion de cellule adaptée pour gérer au moins une seconde cellule radio ; et
- au moins une entité de contrôle adaptée pour contrôler la première entité de gestion de cellule ;
lesdites première et seconde cellules radio se recouvrant au moins partiellement géographiquement ;
ledit procédé comprenant les étapes suivantes au niveau du terminal, ledit terminal disposant d'informations relatives à une zone de voisinage radio de la première cellule :
/1/ recevoir un signal radio d'au moins une cellule du réseau cellulaire ;
/2/ déterminer une information de présence indiquant si le terminal est dans la zone de voisinage radio de la première cellule sur la base desdites informations et du signal radio reçu ; et
/3/ émettre à destination de l'entité de contrôle un message indiquant ladite information de présence.

Ici, l'entité de contrôle peut donc gérer un contexte de présence de terminal dans une zone de voisinage radio de la première cellule par rapport auquel elle peut avantageusement décider d'un état d'activité de la première cellule.

Un quatrième aspect de la présente invention propose une entité de contrôle adaptée pour la mise en oeuvre d'un procédé de contrôle selon le premier aspect de la présente invention.

Un cinquième aspect de la présente invention propose une entité de gestion de cellule adaptée pour mettre en oeuvre un procédé de contrôle selon le deuxième aspect de la présente invention.

Un sixième aspect de la présente invention propose un terminal adapté pour la mise en oeuvre d'un procédé de contrôle selon le troisième aspect de la présente invention.

Un septième aspect de la présente invention propose un réseau cellulaire comprenant une entité de contrôle selon le quatrième aspect de la présente invention et une entité de gestion selon le cinquième aspect de la présente invention adaptée pour un terminal selon le sixième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un réseau cellulaire selon un mode de réalisation de l'art antérieur ;
- la figure 2 illustre les principales étapes d'un procédé de contrôle selon un mode de réalisation de la présente invention au niveau d'une entité de contrôle ;
- les figures 3 et 4 illustrent une procédure de changement d'état d'activité selon un autre mode de réalisation de la présente invention ; et
- la figure 5 illustre une entité de contrôle, une entité de gestion de cellule et un terminal selon un mode de réalisation de la présente invention.

La présente invention peut aisément trouver à s'appliquer à tout type de cellule radio dans un réseau cellulaire, dès lors que cette cellule couvre une zone géographique qui est au moins partiellement également couverte par une autre cellule du réseau cellulaire. Dans ce cas, il est en effet possible de prévoir selon un mode de réalisation de la présente invention de contrôler l'activité de la cellule en fonction de la présence ou non d'au moins un terminal dans une zone de voisinage radio de cette cellule.

Par la suite, à des fins d'illustration de la présente invention, la cellule que l'on se propose d'activer ou de désactiver est de type 'cellule à accès restreint', c'est-à-dire une cellule pour laquelle une liste restreinte d'abonnés est autorisée à accéder à cette cellule. Il convient toutefois de noter que cette caractéristique ne restreint en aucune façon les différentes applications possibles de la présente invention. Ainsi à titre illustratif uniquement, la cellule à activer ou à désactiver est désignée par les termes 'cellule à accès restreint', bien que cette cellule puisse être également une cellule à accès ouvert.

Un des objectifs de la présente invention est de contrôler un état d'activité d'une cellule à accès restreint en fonction de la présence ou non d'au moins un terminal mobile à proximité ou dans la cellule à accès restreint concernée. L'état d'activité d'une cellule à accès restreint dans le contexte d'activité indique si la cellule à accès restreint est active ou inactive. Une cellule à accès restreint active émet des messages radio de sorte à permettre une communication radio à un terminal mobile autorisé qui entrerait dans sa zone de couverture radio. Par contre, une cellule à accès restreint à l'état inactif, ou encore état de veille, n'émet pas de message de radio, et ne permet donc aucune communication à aucun terminal mobile présent dans sa zone de couverture.

Dans ces conditions, il peut être avantageusement prévu de maintenir en activité une cellule à accès restreint dès lors qu'au moins un de ses terminaux abonnés, c'est-à-dire un des terminaux qui peut accéder à cette cellule à accès restreint, est situé à proximité de cette cellule à accès restreint et, dans le cas contraire, de désactiver cette cellule. En procédant ainsi, on peut réduire la consommation en énergie liée à cette cellule à accès restreint. On peut en outre réduire les impacts de ces cellules à accès restreint sur les cellules classiques qui lui sont voisines en limitant de manière pertinente les périodes de temps pendant lesquelles ces cellules à accès restreint émettent des signaux radio, c'est-à-dire pendant lesquelles elles sont dans un état actif.

Il est prévu de contrôler l'état d'activité d'une cellule à accès restreint au niveau réseau dans un réseau cellulaire selon un mode de réalisation de la présente invention. Pour ce faire, on peut prévoir qu'une entité de contrôle, en charge de l'entité de gestion de cellule qui gère la cellule à accès restreint considérée, dispose de données relatives à l'état d'activité courant de la cellule à accès restreint ou des cellules à accès restreint dont elle a la charge, ainsi que de données relatives à la présence ou l'absence, à proximité géographique de la cellule à accès restreint considérée ou encore dans cette cellule considérée, de terminaux mobiles qui sont abonnés auprès de cette ou de ces cellules à accès restreint.

Par la suite, la proximité géographique d'une cellule à accès restreint est référencée sous les termes 'zone de voisinage radio' associée à une cellule à accès restreint.

Les données respectives à la présence de terminaux mobiles dans la zone de voisinage radio d'une cellule à accès restreint peuvent être stockées dans un contexte de présence géré au niveau de l'entité de contrôle et l'état d'activité de chaque cellule à accès restreint gérée par l'entité de contrôle peut être stocké dans un contexte d'activité. Ainsi, sur la base des contextes de présence et d'activité gérés au niveau de l'entité de contrôle, cette dernière est capable de décider d'un changement d'état d'activité d'une cellule à accès restreint.

Pour être plus précis, dans un mode de réalisation de la présente invention, le contexte de présence d'un terminal mobile peut être mis à jour sur la base d'informations reçues depuis ce terminal mobile. En effet, à cet effet, on peut prévoir qu'un terminal mobile est adapté pour déterminer s'il est situé dans une zone de voisinage radio d'une cellule à accès restreint.

Lorsqu'il est situé dans cette zone de voisinage radio, il peut avantageusement être prévu d'en informer l'entité de contrôle. Plus précisément, le terminal mobile peut avantageusement informer l'entité de contrôle d'un changement de localisation par rapport à la zone de voisinage radio considérée. Ainsi, lorsque le terminal détecte qu'il vient d'entrer dans la zone de voisinage radio, il peut émettre un message d'indication de présence à destination de cette entité de contrôle. Puis, lorsqu'il détecte qu'il sort de cette zone de voisinage, il peut alors émettre un message d'indication d'absence à destination de cette même entité de contrôle.

Sur réception de cette indication de présence ou d'absence d'un terminal dans une zone de voisinage radio, l'entité de contrôle peut alors mettre à jour le contexte de présence correspondant. Elle peut ensuite comparer ce changement dans le contexte de présence avec les informations stockées dans le contexte d'activité de sorte à décider si un changement d'état d'activité de la cellule à accès restreint considérée est requis ou non.

Le contexte d'activité par cellule à accès restreint indique soit que la cellule à accès restreint est dans un état actif soit qu'elle est dans un état inactif, c'est-à-dire à l'état de veille.

Dans un mode de réalisation de la présente invention, l'état d'activité d'une cellule à accès restreint est avantageusement fonction de la présence ou non d'au moins un terminal mobile dans la zone de voisinage radio de cette cellule à accès restreint.

Il convient de noter qu'une entité de gestion de cellule à accès restreint peut être en charge de la gestion d'une pluralité de cellules à accès restreint, ces dernières pouvant être dans des états d'activité différents.

Il est alors prévu, qu'au niveau de l'entité de contrôle concernée, une étape de mise à jour d'activité soit effectuée lorsqu'on détecte que certaines conditions sont remplies pour que la cellule à accès restreint change d'état d'activité. Au cours de cette étape de mise à jour d'activité, l'entité de contrôle concernée non seulement met à jour, dans le contexte d'activité de cette cellule à accès restreint son nouvel état d'activité, mais en outre, déclenche le changement effectif de cet état d'activité sur la cellule à accès restreint.

A une mise à jour de ce contexte d'activité, correspond donc soit une étape d'activation de la cellule à accès restreint considérée, soit une étape de désactivation de cette cellule à accès restreint.

Dans un mode de réalisation, l'entité de contrôle décide d'un changement d'état d'activité dans les deux cas suivants :
- lorsqu'un terminal mobile est indiqué comme présent dans la zone de voisinage radio de la cellule à accès restreint considérée et que cette cellule à accès restreint est inactive, alors on déclenche l'activation de cette dernière ;
- lorsque le seul terminal mobile indiqué comme présent dans la zone de voisinage radio quitte cette dernière et que la cellule à accès restreint est active, alors on déclenche l'inactivation de cette cellule à accès restreint.

Il est prévu de déclencher l'état inactif en mettant en oeuvre une procédure de désactivation de la cellule à accès restreint. Cette procédure de désactivation est de préférence initiée lorsque les contextes de présence des terminaux mobiles autorisés à accéder à la cellule à accès restreint sont tous dans l'état absent dans le contexte de présence de l'entité de contrôle correspondante.

Il est prévu de déclencher l'état 'actif sur une cellule à accès restreint en mettant en oeuvre une procédure d'activation de la cellule à accès restreint, y compris après son activation initiale. Ainsi, l'état actif est l'état précédent l'état inactif d'une cellule à accès restreint.

Cette procédure d'activation est déclenchée lorsqu'au moins un des terminaux mobiles autorisés à accéder à cette cellule à accès restreint est dans l'état présent dans le contexte de présence géré par l'entité de contrôle. Ainsi, l'état actif d'une cellule à accès restreint correspond au fait qu'il y ait au moins un terminal mobile dans la zone de voisinage radio de la cellule à accès restreint d'une part, et au fait que la cellule à accès restreint soit dans un état actif d'autre part, c'est-à-dire qu'elle émet des messages radio permettant à un terminal d'établir une communication et qu'elle est reliée à l'entité de contrôle qui en a la charge.

Le contexte de présence contient des données indiquant un état de présence par cellule à accès restreint gérée par l'entité de contrôle et par terminal mobile abonné. Cet état de présence peut soit correspondre à l'état 'présent' lorsque le terminal mobile est dans la zone de voisinage radio de la cellule à accès restreint considérée, soit à l'état 'absent' lorsque celui-ci est localisé hors de cette zone de voisinage radio.

La mise en oeuvre plus détaillée de la mise à jour des contextes de présence et d'activité au niveau de l'entité de contrôle en charge d'une cellule à accès restreint, et des procédures d'activation et de désactivation de cette cellule sont détaillées dans des sections suivantes.

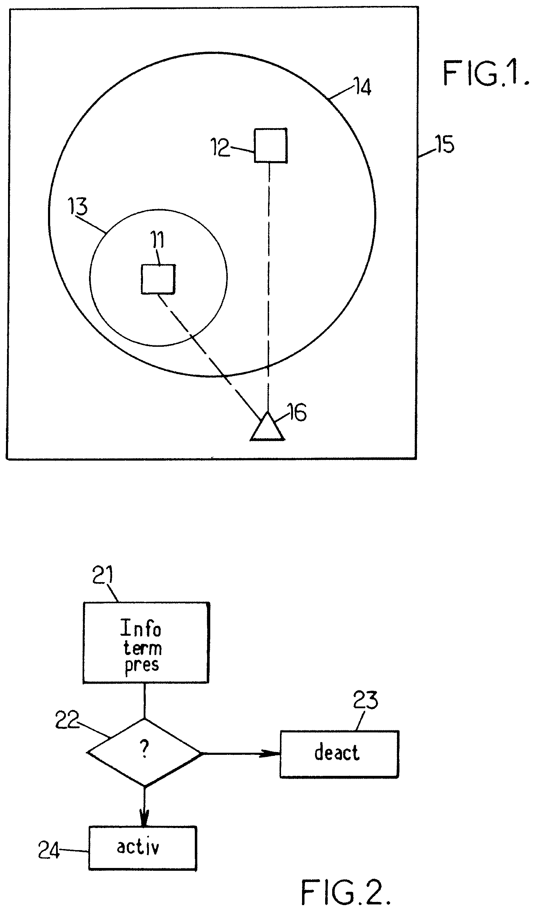

La figure 1 illustre un réseau cellulaire 15 selon un mode de réalisation de la présente invention. Ce réseau cellulaire 15 comprend une première entité de gestion de cellule 11 présentant une première cellule radio 13. Cette première cellule radio peut être destinée à offrir une couverture radio sur une zone géographique relativement limitée, telle qu'un lieu d'habitation délimité ou encore une entreprise.

Ce réseau de télécommunications 15 comprend en outre une seconde entité de gestion de cellule 12 présentant une seconde cellule radio 14. La seconde entité de gestion de cellule 12 peut correspondre à une station de base d'un réseau radio cellulaire classique tel qu'un LTE.

Il convient de noter que les première et seconde cellules radio 13 et 14 présentent une zone géographique de couverture radio commune, les zones de couverture respectives se recouvrant au moins partiellement. Cette caractéristique permet d'activer la première cellule 13 lorsque la présence d'un terminal est détectée dans cette zone géographique commune.

La figure 2 illustre les principales étapes d'un procédé de contrôle selon un mode de réalisation de la présente invention au niveau d'une entité de contrôle. A une étape 21, l'entité de contrôle 16 obtient une information de présence relative à la présence d'au moins un terminal dans une zone de voisinage radio de la cellule à accès restreint 13. Cette information peut être obtenue à partir d'un contexte de présence relatif à tous les terminaux mobiles qui sont abonnés à cette cellule à accès restreint. Elle indique au final si au moins un terminal abonné est présent ou non dans la zone considérée. Puis, à une étape 22, on se base sur cette information de présence pour décider si on active la cellule à accès restreint à une étape 24 ou si on la désactive à une étape 23.

La détection d'un changement dans le contexte de présence peut déclencher un changement de l'activité de la cellule considérée. Or, dans un mode de réalisation de la présente invention, le contexte de présence est modifié sur réception d'indication soit de présence soit d'absence d'un terminal. Par conséquent, le mécanisme de contrôle d'activité de la cellule selon un mode de réalisation de la présente invention est initié sur une action au niveau du terminal.

Dans un mode de réalisation de la présente invention, la première entité de gestion de cellule 11 est gérée par une entité de contrôle 16. Cette dernière peut être une entité du réseau cellulaire classique auquel appartient l'entité de gestion de cellule 12.

On peut prévoir que cette même entité de contrôle 16 soit également en charge de la gestion de la seconde entité de gestion de cellule 12. Aucune limitation n'est attachée à la présente invention, quand au fait que ce soit la même entité de contrôle qui soit en charge de la gestion des deux entités de gestion de cellule ou non. On peut en effet envisager que deux entités de contrôle distinctes soient en charge respectivement des deux entités de gestion de cellule 11 et 12.

Dans un mode de réalisation de la présente invention, on définit relativement à une cellule à accès restreint une zone de voisinage radio qui correspond à la zone de couverture radio d'une ou plusieurs cellules voisines de cette cellule à accès restreint. Cette zone de voisinage radio d'une cellule à accès restreint est une zone géographique de référence pour la position d'un terminal mobile relativement à cette cellule à accès restreint, et plus particulièrement pour la gestion du contexte de présence.

Aucune limitation n'est attachée à la présente invention au regard de la manière de déterminer une telle zone de voisinage radio relative à une cellule à accès restreint. On peut notamment prévoir que chaque terminal mobile selon un mode de réalisation de la présente invention est en charge de déterminer la ou les zones de voisinage associées à chaque cellule à accès restreint à laquelle il a accès. A cet effet, on peut fournir aux abonnés de la cellule à accès restreint en question, une liste d'informations stockées sur leur terminal qui leur permet d'identifier, sur la base d'indication reçue via des signaux radio des cellules, si le terminal est dans une zone de voisinage radio de la cellule à accès restreint considérée.

Le terminal a alors accès à des données préalablement stockées en mémoire qui lui permettront de déterminer s'il est situé dans une zone de voisinage radio d'une cellule à accès restreint à laquelle il a accès. Ces données préalablement stockées peuvent être par exemple une liste d'identifiants des cellules voisines. Quand un terminal est présente dans une cellule, l'identifiant de la cellule lui est transmis en général en tant qu'information système de la cellule.

Grâce à de telles données, et sur la base de mesure radio effectuée, il pourra alors déterminer sa présence dans une zone de voisinage radio et en informer l'entité de contrôle associée à la cellule à accès restreint de sorte à adapter son état d'activité.

Ces mesures radio peuvent lui être indiquées de plusieurs façons et aucune limitation à ce sujet n'est attachée à la présente invention. Ainsi, on peut prévoir que ces mesures sont par exemple obtenues à partir d'informations reçues depuis le réseau, comme par exemple depuis des entités de contrôle.

On peut envisager que le terminal mobile effectue une détection autonome de ces mesures radio, par exemple à partir d'informations fournies par les cellules voisines de la cellule à accès restreint considérée.

Il est également possible de prévoir une signalisation dédiée, entre la première entité de gestion à laquelle le terminal mobile est rattaché et le terminal mobile, adaptée pour fournir des informations permettant de déterminer une zone de voisinage radio au niveau du terminal. Ainsi, via une telle signalisation, le terminal mobile peut recevoir, notamment lorsqu'il est en mode connecté, une liste de cellules voisines de la cellule à accès restreint fournie par le réseau, ces cellules radio voisines constituant alors la zone de voisinage radio associée à la cellule à accès restreint considérée.

On peut prévoir que le terminal décide qu'il est dans une zone de voisinage radio d'une cellule à accès restreint dès qu'il est en mesure de simplement décoder le canal pilote correspondant à au moins une cellule de liste des cellules voisines.

On peut être plus exigeant dans la décision de présence d'un terminal, en prévoyant de considérer qu'un terminal est présent dans une zone de voisinage radio seulement s'il est en mesure d'effectuer une communication de qualité dans la cellule en question. A cet effet, on peut par exemple définir une valeur seuil de niveau de qualité de service et une valeur seuil de puissance de signal relatives à un signal dans les cellules indiquées dans la zone de voisinage radio considérée et on peut alors prévoir que le terminal décide de sa présence dans la zone de voisinage radio si il reçoit un signal dont la puissance et le niveau de qualité de service sont supérieurs auxdites valeurs seuil correspondantes respectivement.

La présence dans une zone de voisinage radio d'une cellule à accès restreint peut être mise à jour au niveau du terminal mobile dès qu'une nouvelle cellule à accès restreint apparaît disponible ou indisponible au niveau du terminal mobile, quelque soit le ou les critères de mesures radio que ce terminal mobile utilise pour sélectionner une cellule dans la zone de voisinage radio.

Les cellules à accès restreint peuvent également être prises en compte dans le contexte de zone de voisinage radio, lorsque le terminal mobile est autorisé à y accéder et également en mesure d'y accéder.

Dans un mode de réalisation, l'état 'absent' est déclenché lorsque le terminal mobile détecte qu'il sort de la zone de voisinage radio de la cellule à accès restreint. Ceci correspond au fait que le terminal mobile sélectionne une cellule radio, qui peut être soit une cellule à accès restreint soit encore une cellule classique, qui n'appartient pas à la zone de voisinage radio enregistrée par le terminal mobile relativement à la cellule à accès restreint considérée.

L'état 'présent' est déclenché lorsque le terminal mobile détecte qu'il entre dans la zone de voisinage radio de la cellule à accès restreint considérée. Ceci correspond au fait que le terminal mobile sélectionne une cellule, qui peut être soit une cellule à accès restreint soit encore une cellule classique, qui appartient à la zone de voisinage radio enregistrée par le terminal relativement à la cellule à accès restreint considérée.

Sur la base de cet état de présence attaché au terminal l'entité de contrôle met avantageusement à jour son contexte de présence.

A cet effet, il peut être prévu de mettre en oeuvre, au niveau d'un terminal mobile, des procédures d'indication de présence ou d'absence du terminal mobile dans la zone de voisinage radio de la cellule à accès restreint. Ces procédures d'indication visent à permettre de signaler au niveau du réseau l'entrée d'un terminal mobile dans une zone de voisinage radio d'une cellule à accès restreint, respectivement la sortie du terminal mobile d'une zone de voisinage radio d'une cellule à accès restreint.

Dans un mode de réalisation de la présente invention, on prévoit de gérer au niveau du terminal mobile la détection de l'entrée ou de la sortie du terminal mobile d'une zone de voisinage radio, en utilisant un bit de présence associé à chaque cellule à accès restreint à laquelle ce terminal mobile peut accéder.

Ce bit de présence peut être positionné à la valeur 1 par la mise en oeuvre d'une procédure d'indication de présence, et à la valeur 0 par la mise en oeuvre d'une procédure d'indication d'absence ou encore lorsque le terminal mobile est mis hors tension.

Ainsi, lorsque le terminal mobile sélectionne une cellule qui n'appartient pas à la zone de voisinage radio d'une cellule à accès restreint à laquelle il peut accéder, il vérifie l'état du bit de présence de cette cellule à accès restreint. Lorsqu'il détecte qu'un bit de présence est à la valeur 1, le terminal mobile met alors en oeuvre une procédure d'indication d'absence. Lorsqu'il détecte qu'un bit de présence est à la valeur 0, alors le terminal mobile peut ne rien faire.

Lorsque le terminal mobile sélectionne une cellule qui appartient à la zone de voisinage radio d'une cellule à accès restreint à laquelle il peut accéder, il vérifie alors l'état du bit de présence associé à cette cellule à accès restreint. Si ce bit de présence est à la valeur 0, le terminal mobile met alors en oeuvre une procédure d'indication de présence. Si ce bit de présence est à la valeur 1 alors le terminal mobile peut ne rien faire.

Ce bit de présence est positionné à la valeur 0 pour toutes les cellules à accès restreint auxquelles le terminal mobile a accès, lors de la mise hors tension du terminal mobile considéré, par mise en oeuvre d'une procédure d'indication d'absence.

Après la mise sous tension du terminal mobile, si la cellule sélectionnée par le terminal mobile fait partie du contexte de voisinage d'une cellule à accès restreint à laquelle le terminal a accès, le terminal mobile met alors en oeuvre une procédure d'indication de présence.

Le terminal mobile peut donc déclencher la procédure d'indication de présence lorsque la cellule sélectionnée par le terminal mobile fait partie de la zone de voisinage radio d'une cellule à accès restreint à laquelle il a accès, ou bien lorsque cette cellule sélectionnée est elle-même une des cellules à accès restreint à laquelle il a accès, et que le bit de présence du terminal mobile considéré est positionné à la valeur 0.

Lorsque le terminal mobile décide de déclencher une procédure d'indication de présence, il construit alors un message de présence à destination de l'entité de contrôle en charge de la cellule à accès restreint associée à la zone de voisinage radio qui est elle-même associée à la cellule que le terminal mobile vient de sélectionner afin d'informer cette dernière de son état de présence.

Ce message de présence peut contenir les informations suivantes :
- un identifiant global de la cellule à accès restreint ;
- un identifiant de l'abonné correspondant au terminal mobile, cet identifiant permettant de lancer une procédure d'authentification, il peut correspondre à l'identifiant fourni de manière temporaire par le réseau lors de la dernière mise à jour de localisation du terminal mobile.

Ce message de présence peut aussi en outre comprendre un identifiant d'un groupe de cellules à accès restreint auquel appartient la cellule à accès restreint considérée. Cette information peut être notamment pertinente lorsqu'un contrôle d'accès est réalisé au niveau de ce groupe de cellules à accès restreint. En effet, dans ce cas, cette information est requise pour vérifier que le terminal mobile abonné est autorisé à accéder à ce groupe de cellules à accès restreint.

Lorsque le message de présence utilisé pour la procédure d'indication de présence et celui utilisé pour la procédure d'indication d'absence présentent le même format, on prévoit d'indiquer dans ce message de présence, via un bit, s'il s'agit d'une entrée dans la zone de voisinage radio ou d'une sortie de la zone de voisinage radio de la cellule à accès restreint considérée pour le terminal mobile.

De façon réciproque, le terminal mobile décide de déclencher la procédure d'indication d'absence lorsque la cellule sélectionnée ne fait pas partie de la zone de voisinage radio d'une cellule à accès restreint à laquelle il a accès, et que le bit de présence du terminal mobile associé à cette zone de voisinage radio est positionné à la valeur 1.

Cette procédure peut également être initiée lorsque le terminal mobile est mis hors tension, comme par exemple avant ou pendant une procédure de détachement du réseau. Comme indiqué plus haut, le bit de présence est positionné à la valeur 0 dans le cas de mise hors tension.

Dans le cas où le terminal mobile déclenche une procédure d'indication d'absence, il peut émettre un message d'absence à destination de l'entité de contrôle afin de l'informer de cet état. Il peut fournir dans ce message notamment les éléments suivants :
- un identifiant global de la cellule à accès restreint ;
- un identifiant de l'abonné, permettant de lancer une procédure d'authentification, cet identifiant pouvant correspondre à l'identifiant temporaire fourni par le réseau lors de la dernière mise à jour de localisation du terminal mobile considéré.

Ce message d'absence peut également indiquer un identifiant d'un groupe de cellules à accès restreint à laquelle appartient la cellule à accès restreint considérée. En particulier, si le contrôle d'accès est réalisé au niveau du groupe de cellules, cette information peut être requise pour vérifier que l'abonné est autorisé à accéder à ce groupe de cellules à accès restreint.

Cette procédure d'indication de présence et/ ou procédure d'indication d'absence peut être basée sur l'utilisation de messages déjà définis dans le réseau cellulaire auquel appartient l'entité de contrôle. Ainsi, on peut prévoir de se baser sur le format des messages des procédures de mise à jour de localisation existantes dans le réseau cellulaire classique en y ajoutant les informations requises et citées ci-avant.

Dans un mode de réalisation de la présente invention, l'entité de gestion de cellule à accès restreint échange des informations avec l'entité de contrôle qui est en charge de sa gestion. De telles informations correspondent notamment à la mise en oeuvre d'une procédure d'activation de cellule à accès restreint, cette dernière étant déclenchée si au moins un terminal mobile est présent dans le contexte de présence associée à la cellule à accès restreint considérée et si la cellule à accès restreint est inactive dans le contexte d'activité.

Dans le cas où l'entité de gestion de cellule en charge d'une cellule à accès restreint inactive est la seule cellule à accès restreint gérée par cette entité de gestion de cellule ou si les autres cellules à accès restreint gérées par cette entité de gestion de cellule sont également inactives, alors il est possible qu'aucune connexion logique ne soit en cours entre cette entité de gestion de cellule et l'entité de contrôle en ayant la charge.

Dans ces conditions, l'entité de contrôle peut alors émettre un message d'activation à destination de l'entité de gestion de cellule correspondante afin d'établir une connexion logique avec cette entité de gestion de cellule.

Sur réception du message d'activation, l'entité de gestion de cellule poursuit l'établissement de la connexion logique avec l'entité de contrôle et active la cellule à accès restreint considérée, c'est-à-dire qu'elle émet des messages radio relatifs à cette cellule à accès restreint qui permettent à des terminaux mobiles d'établir des connexions radio via l'entité de gestion de cellule.

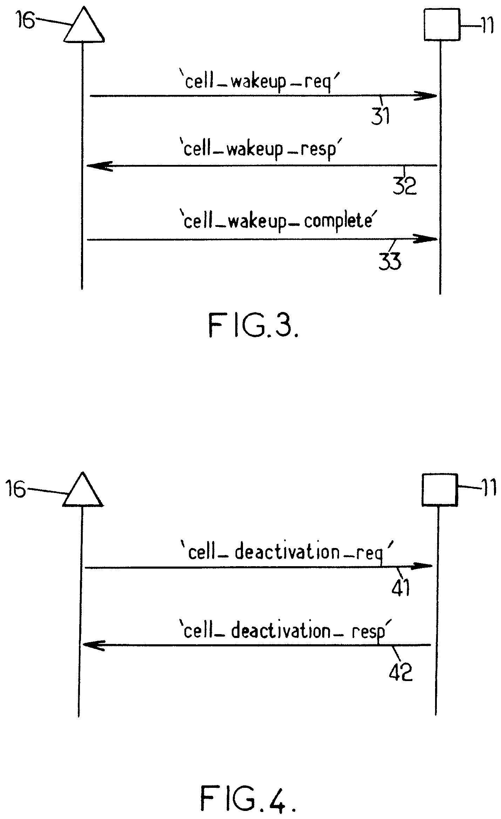

La procédure d'activation selon un mode de réalisation de la présente invention est détaillée ci-après en référence à la figure 3.

Un message 'cell_wakeup_request' 31 requérant l'activation de la cellule à accès restreint est émis par l'entité de contrôle 16 à destination de l'entité de gestion de cellule 11.

Puis, un message de réponse 'cell_wakeup_response' 32 est envoyé par l'entité de gestion de cellule 11 à destination de l'entité de contrôle 16 afin d'acquitter la réception du précédent message. Ce message de réponse 32 indique des informations requises pour l'établissement d'une connexion entre l'entité de gestion de cellule 11 et l'entité de contrôle 16.

Ensuite, un message de confirmation 33 'cell_wakeup_complete' est émis depuis l'entité de contrôle 16 vers l'entité de gestion de cellule 11 afin de confirmer la mise en oeuvre de la procédure d'activation.

La procédure de désactivation de la cellule à accès restreint est mise en oeuvre lorsqu'il n'existe aucun contexte de présence de terminal pour cette cellule à accès restreint à l'état présent, et que dans le contexte d'activité la cellule à accès restreint considérée est dans l'état actif.

Dans ce cas de figure, l'entité de contrôle 16 en charge de l'entité de gestion de cellule 11 de cette cellule à accès restreint peut initier une relâche d'une connexion logique entre elle-même 16 et cette entité de gestion de cellule 11 si cette dernière ne gère que cette cellule à accès restreint 13, ou si les autres cellules à accès restreint gérées par cette entité de gestion de cellule 11 sont dans l'état inactif aussi. Dans ce cas, l'entité de gestion de cellule peut alors elle-même passer dans un mode veille.

Sur réception d'un message de désactivation, l'entité de gestion de cellule 11 désactive la cellule à accès restreint concernée, c'est-à-dire qu'elle arrête l'émission d'informations de cette cellule sur l'interface radio, et plus aucune connexion radio avec un terminal mobile ne peut être établie à partir de cette étape.

La figure 4 illustre une procédure de désactivation.

Un message de désactivation 41 'cell_deactivation_request' est envoyé par l'entité de contrôle 16 à l'entité de gestion de cellule 11 pour désactiver la cellule. Sur réception de ce message de désactivation au niveau de l'entité de gestion de cellule de la cellule à accès restreint considérée, l'entité de gestion de cellule stoppe la transmission de messages radio : la cellule à accès restreint ne peut donc plus accepter de connexion radio pour un terminal mobile.

Un message de réponse 42 est émis depuis l'entité de gestion de cellule 11 'cell_deactivation_response' pour acquitter le message de désactivation de l'entité de contrôle et indiquer que la désactivation de la cellule à accès restreint est effectuée.

A ce stade, il n'existe plus de connexion logique entre l'entité de gestion de cellule 11 et l'entité de contrôle 16 si toutes les cellules à accès restreint gérées par l'entité de gestion de cellule ont été désactivées, et l'état de la cellule à accès restreint est inactif dans le contexte d'activité de l'entité de contrôle.

Dans un mode de réalisation de la présente invention, il est possible que l'entité de contrôle 16 en charge de la gestion de l'entité de gestion de cellule 11 soit un équipement différent de la ou les entités de contrôle qui gèrent les autres entités de gestions de cellules, ou stations de base, en charge de la gestion des cellules appartenant à la zone de voisinage radio correspondante.

Le terminal émet un message d'indication de présence ou d'absence à destination de l'entité de contrôle en charge de la gestion de l'entité de gestion de la cellule qu'il vient de détecter.

Il est avantageux de définir une procédure d'information permettant à une entité de contrôle d'informer une autre entité de contrôle de l'entrée ou de la sortie d'un terminal mobile de la zone de voisinage radio considérée.

Cela peut être réalisé de plusieurs façons différentes.

On peut par exemple prévoir que cette procédure d'information inter-entité de contrôle soit effectuée via un transfert de message reçu depuis le terminal mobile, ce message pouvant être transféré dans un message conteneur selon un protocole de communication inter-entité de contrôle, ou encore dit protocole inter-noeud. Cette solution peut être avantageuse relativement à des considérations de délai de transmission, puisque l'entité de contrôle émettrice du message n'a alors pas besoin de construire un message indiquant des identifiants de la cellule à accès restreint, du terminal mobile, et voire même du groupe de cellules à accès restreint le cas échéant. Toutefois, le message du terminal mobile est analysé par l'entité de contrôle le recevant depuis le terminal mobile afin de déterminer à quelle entité de contrôle il convient de le transférer, c'est-à-dire quelle entité de contrôle gère la cellule à accès restreint indiquée dans le message.

On peut également prévoir que la procédure d'information soit basée sur la transmission d'informations par le terminal mobile directement dans un message selon un protocole inter-noeud. Il est alors possible de limiter le sur-débit (ou 'overhead', en anglais) puisque les identifiants fournis par le terminal mobile sont déjà intégrés au protocole inter-noeuds.

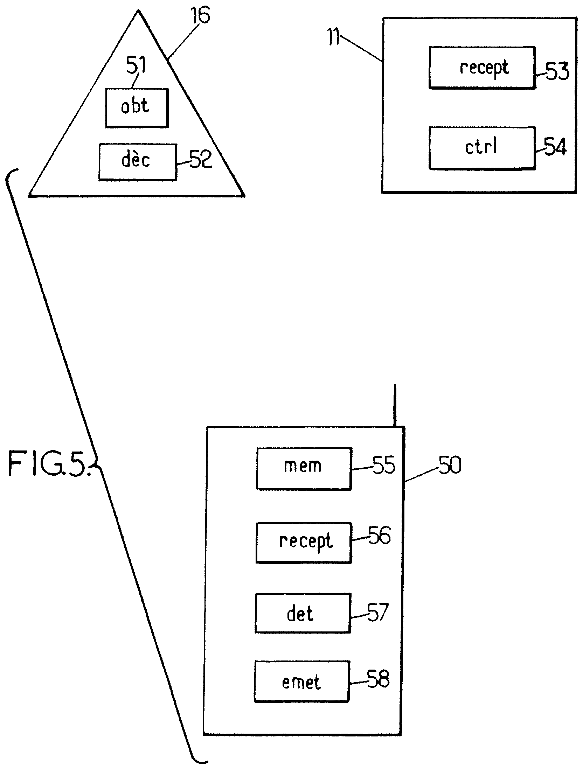

La figure 5 illustre une entité de contrôle 16, une entité de gestion de cellule 11 et un terminal selon un mode de réalisation de la présente invention.

Une entité de contrôle 16 selon un mode de réalisation de la présente invention peut comprendre :
- une unité d'obtention 51 adaptée pour obtenir une information de présence relative à la présence d'au moins un terminal dans une zone de voisinage radio de la première cellule ;
- une unité de décision 52 pour décider un état d'activité de la première cellule en fonction de ladite information de présence.

Une entité de gestion 11 selon un mode de réalisation de la présente invention peut comprendre :
- un récepteur 53 adapté pour recevoir un message d'activation, respectivement de désactivation, depuis l'entité de contrôle 16 ; et
- un contrôleur 54 adapté pour mettre dans un état actif, respectivement dans un état inactif, la première cellule.

Un terminal 50 selon un mode de réalisation de la présente invention peut comprendre :
- une mémoire 55 stockant des informations relatives à une zone de voisinage radio de la première cellule ;
- un récepteur 56 adapté pour recevoir un signal radio d'au moins une cellule ;
- une unité de détermination 57 adaptée pour déterminer une information de présence indiquant si le terminal est dans la zone de voisinage radio de la première cellule sur la base des informations et du signal radio reçu ; et
- un émetteur 58 adapté pour émettre à destination de l'entité de contrôle 16 un message indiquant ladite information de présence.

## Revendications

1. Procédé de contrôle dans un réseau cellulaire (15) comprenant :
- une première entité de gestion de cellule (11) adaptée pour gérer une première cellule radio (13) qui peut être dans un état actif ou dans un état inactif ;
- une seconde entité de gestion de cellule (12) adaptée pour gérer au moins une seconde cellule radio (14) ; et
- au moins une entité de contrôle (16) adaptée pour contrôler la première entité de gestion de cellule ;
lesdites première et seconde cellules radio se recouvrant au moins partiellement géographiquement ;
ledit procédé comprenant les étapes suivantes au niveau de l'entité de contrôle :
/1/ obtenir (21) une information de présence relative à la présence d'au moins un terminal (50) dans une zone de voisinage radio de la première cellule ;
/2/ décider (23, 24) un état d'activité de la première cellule en fonction de ladite information de présence ;
ladite zone de voisinage radio de la première cellule comprenant au moins la seconde cellule.

2. Procédé de contrôle selon la revendication 1, dans lequel, l'entité de contrôle (16) décide d'un changement état d'activité depuis un état inactif à un état actif pour la première cellule (13), lorsque l'information de présence indique qu'au moins un terminal (50) est présent dans la zone de voisinage radio de la première cellule.

3. Procédé de contrôle selon la revendication 1, dans lequel, l'entité de contrôle (16) décide d'un changement état d'activité depuis un état actif à un état inactif pour la première cellule (13), lorsque l'information de présence indique qu'aucun terminal n'est présent dans la zone de voisinage radio de la première cellule.

4. Procédé de contrôle selon la revendication 1, dans lequel l'entité de contrôle (16) reçoit un message d'indication de présence, respectivement un message d'indication d'absence, depuis un terminal (50) détectant qu'il entre dans, respectivement sort de, la zone de voisinage radio de la première cellule (13).

5. Procédé de contrôle selon la revendication 4, dans lequel l'entité de contrôle (16) est en charge du contrôle à la fois de la première et de la seconde cellule, et dans lequel le message d'indication de présence ou d'absence est transmis par le terminal à destination de ladite entité de contrôle (16).

6. Procédé de contrôle selon la revendication 4, dans lequel une autre entité de contrôle est en charge du contrôle de la seconde cellule (14), et dans lequel le message d'indication de présence ou d'absence est transmis par le terminal (50) à destination de ladite autre entité de contrôle, ladite autre entité de contrôle transmettant ledit message d'indication à destination de l'entité de contrôle (16) en charge de la gestion de la première cellule.

7. Procédé de contrôle d'un terminal (50) dans un réseau cellulaire (15) comprenant :
- une première entité de gestion de cellule (11) adaptée pour gérer une première cellule radio (13) qui peut être dans un état actif ou dans un état inactif ;
- une seconde entité de gestion de cellule (12) adaptée pour gérer au moins une seconde cellule radio (14) ; et
- au moins une entité de contrôle (16) adaptée pour contrôler la première entité de gestion de cellule ;
lesdites première et seconde cellules radio se recouvrant au moins partiellement géographiquement ;
ledit procédé comprenant les étapes suivantes au niveau du terminal, ledit terminal disposant d'informations relatives à une zone de voisinage radio de la première cellule :
/1/ recevoir un signal radio d'au moins une cellule du réseau cellulaire ;
/2/ déterminer une information de présence indiquant si le terminal est dans la zone de voisinage radio de la première cellule sur la base desdites informations et du signal radio reçu ; et
/3/ émettre à destination de l'entité de contrôle (16) un message indiquant ladite information de présence.

8. Entité de contrôle (16) dans un réseau cellulaire (15) comprenant :
- une première entité de gestion de cellule (11) adaptée pour gérer une première cellule radio (13) qui peut être dans un état actif ou dans un état inactif ;
- une seconde entité de gestion de cellule (12) adaptée pour gérer au moins une seconde cellule radio (14) ; et
- au moins une entité de contrôle (16) adaptée pour contrôler la première entité de gestion de cellule ;
lesdites première et seconde cellules radio se recouvrant au moins partiellement géographiquement ;
ladite entité de contrôle comprenant :
- une unité d'obtention (51) adaptée pour obtenir une information de présence relative à la présence d'au moins un terminal dans une zone de voisinage radio de la première cellule ;
- une unité de décision (52) pour décider un état d'activité de la première cellule en fonction de ladite information de présence ;
ladite zone de voisinage radio de la première cellule comprenant au moins la seconde cellule.

9. Terminal (50) adapté pour opérer dans un réseau cellulaire (15) comprenant :
- une première entité de gestion de cellule (11) adaptée pour gérer une première cellule radio (13) qui peut être dans un état actif ou dans un état inactif ;
- une seconde entité de gestion de cellule (12) adaptée pour gérer au moins une seconde cellule radio (14) ; et
- au moins une entité de contrôle (16) adaptée pour contrôler la première entité de gestion de cellule ;
lesdites première et seconde cellules radio se recouvrant au moins partiellement géographiquement ;
ledit terminal comprenant :
- une mémoire (55) stockant des informations relatives à une zone de voisinage radio de la première cellule ;
- un récepteur (56) adapté pour recevoir un signal radio d'au moins une cellule ;
- une unité de détermination (57) adaptée pour déterminer une information de présence indiquant si le terminal est dans la zone de voisinage radio de la première cellule sur la base desdites informations et du signal radio reçu ; et
- un émetteur (58) adapté pour émettre à destination de l'entité de contrôle (16) un message indiquant ladite information de présence.

10. Réseau cellulaire (15) comprenant une entité de gestion (11) de cellule dans un réseau cellulaire (15) adaptée pour gérer une première cellule radio (13) qui peut être dans un état actif ou dans un état inactif ;
ledit réseau cellulaire comprenant :
une autre entité de gestion de cellule (12) adaptée pour gérer au moins une seconde cellule radio (14) ; et
- au moins une entité de contrôle (16) adaptée pour contrôler l'entité de gestion de cellule de la première cellule radio ;
lesdites première et seconde cellules radio se recouvrant au moins partiellement géographiquement ;
l'entité de gestion de cellule de la première cellule comprenant :
- un récepteur (53) adapté pour recevoir un message d'activation, respectivement de désactivation, depuis l'entité de contrôle ; et
- un contrôleur (54) adapté pour mettre dans un état actif, respectivement dans un état inactif, la première cellule
, et une entité de contrôle selon la revendication 8 adapté pour un terminal selon la revendication 9.

11. Programme d'ordinateur destiné à être installé dans une entité de contrôle (16) selon la revendication 8, comprenant des instructions aptes à mettre en oeuvre le procédé selon la revendication 1, lors d'une exécution du programme par des moyens de traitement de l'entité de contrôle.

## Patentansprüche

1. Steuerverfahren in einem zellularen Netzwerk (15), das enthält:
- eine erste Zellenverwaltungsentität (11), die geeignet ist, eine erste Funkzelle (13) zu verwalten, die in einem aktiven oder einem inaktiven Zustand sein kann;
- eine zweite Zellenverwaltungsentität (12), die geeignet ist, mindestens eine zweite Funkzelle (14) zu verwalten; und
- mindestens eine Steuerentität (16), die geeignet ist, die erste Zellenverwaltungsentität zu steuern;
wobei die ersten und zweiten Funkzellen sich zumindest teilweise geographisch überlappen;
wobei das Verfahren die folgenden Schritte im Bereich der Steuerentität enthält:
/1/Erhalt (21) einer Anwesenheitsinformation bezüglich der Anwesenheit mindestens eines Endgeräts (50) in einer Funknachbarschaftszone der ersten Zelle;
/2/Bestimmen (23, 24) eines Aktivitätszustands der ersten Zelle abhängig von der Anwesenheitsinformation;
wobei die Funknachbarschaftszone der ersten Zelle mindestens die zweite Zelle enthält.

2. Steuerverfahren nach Anspruch 1, wobei die Steuerentität (16) über eine Aktivitätszustandsänderung von einem inaktiven Zustand in einen aktiven Zustand für die erste Zelle (13) bestimmt, wenn die Anwesenheitsinformation anzeigt, dass mindestens ein Endgerät (50) in der Funknachbarschaftszone der ersten Zelle anwesend ist.

3. Steuerverfahren nach Anspruch 1, wobei die Steuerentität (16) über eine Aktivitätszustandsänderung von einem aktiven Zustand in einen inaktiven Zustand für die erste Zelle (13) bestimmt, wenn die Anwesenheitsinformation anzeigt, dass kein Endgerät in der Funknachbarschaftszone der ersten Zelle anwesend ist.

4. Steuerverfahren nach Anspruch 1, wobei die Steuerentität (16) eine Anwesenheitsanzeigenachricht bzw. eine Abwesenheitsanzeigenachricht von einem Endgerät (50) empfängt, das erfasst, dass es in die Funknachbarschaftszone der ersten Zelle (13) ein- bzw. daraus austritt.

5. Steuerverfahren nach Anspruch 4, wobei die Steuerentität (16) für die Steuerung sowohl der ersten als auch der zweiten Zelle zuständig ist, und wobei die Anwesenheits- oder Abwesenheitsanzeigenachricht vom Endgerät an die Steuerentität (16) übertragen wird.

6. Steuerverfahren nach Anspruch 4, wobei eine andere Steuerentität für die Steuerung der zweiten Zelle (14) zuständig ist, und wobei die Anwesenheits- oder Abwesenheitsanzeigenachricht vom Endgerät (50) an die andere Steuerentität übertragen wird, wobei die andere Steuerentität die Anzeigenachricht an die Steuerentität (16) überträgt, die für die Verwaltung der ersten Zelle zuständig ist.

7. Steuerverfahren eines Endgeräts (50) in einem zellularen Netz (15), das enthält:
- eine erste Zellenverwaltungsentität (11), die geeignet ist, eine erste Funkzelle (13) zu verwalten, die in einem aktiven Zustand oder in einem inaktiven Zustand sein kann;
- eine zweite Zellenverwaltungsentität (12), die geeignet ist, mindestens eine zweite Funkzelle (14) zu verwalten; und
- mindestens eine Steuerentität (16), die geeignet ist, die erste Zellenverwaltungsentität zu steuern;
wobei die ersten und zweiten Funkzellen sich zumindest teilweise geographisch überlappen;
wobei das Verfahren die folgenden Schritte im Bereich des Endgeräts enthält, wobei das Endgerät über Informationen bezüglich einer Funknachbarschaftszone der ersten Zelle verfügt:
/1/Empfang eines Funksignals von mindestens einer Zelle des zellularen Netzes;
/2/Festlegen einer Anwesenheitsinformation, die anzeigt, ob das Endgerät sich in der Funknachbarschaftszone der ersten Zelle befindet, auf der Basis der Informationen und des empfangenen Funksignals; und
/3/Senden an die Steuerentität (16) einer die Anwesenheitsinformation anzeigenden Nachricht.

8. Steuerentität (16) in einem zellularen Netz (15), die enthält:
- eine erste Zellenverwaltungsentität (11), die geeignet ist, eine erste Funkzelle (13) zu verwalten, die in einem aktiven Zustand oder in einem inaktiven Zustand sein kann;
- eine zweite Zellenverwaltungsentität (12), die geeignet ist, mindestens eine zweite Funkzelle (14) zu verwalten; und
- mindestens eine Steuerentität (16), die geeignet ist, die erste Zellenverwaltungsentität zu steuern;
wobei die ersten und zweiten Funkzellen sich zumindest teilweise geographisch überlappen;
wobei die Steuerentität enthält:
- eine Erhaltseinheit (51), die geeignet ist, eine Anwesenheitsinformation bezüglich der Anwesenheit mindestens eines Endgeräts in einer Funknachbarschaftszone der ersten Zelle zu erhalten;
- eine Bestimmungseinheit (52), um einen Aktivitätszustand der ersten Zelle abhängig von der Anwesenheitsinformation zu bestimmen;
wobei die Funknachbarschaftszone der ersten Zelle mindestens die zweite Zelle enthält.

9. Endgerät (50), das geeignet ist, in einem zellularen Netz (15) zu arbeiten, das enthält:
- eine erste Zellenverwaltungsentität (11), die geeignet ist, eine erste Funkzelle (13) zu verwalten, die in einem aktiven Zustand oder in einem inaktiven Zustand sein kann;
- eine zweite Zellenverwaltungsentität (12), die geeignet ist, mindestens eine zweite Funkzelle (14) zu verwalten; und
- mindestens eine Steuerentität (16), die geeignet ist, die erste Zellenverwaltungsentität zu steuern;
wobei die ersten und zweiten Funkzellen sich zumindest teilweise geographisch überlappen;
wobei das Endgerät enthält:
- einen Speicher (55), der Informationen bezüglich einer Funknachbarschaftszone der ersten Zelle speichert;
- einen Empfänger (56), der geeignet ist, ein Funksignal von mindestens einer Zelle zu empfangen;
- eine Festlegungseinheit (57), die geeignet ist, eine Anwesenheitsinformation festzulegen, die anzeigt, ob das Endgerät sich in der Funknachbarschaftszone der ersten Zelle befindet, auf der Basis der Informationen und des empfangenen Funksignals; und
- einen Sender (58), der geeignet ist, an die Steuerentität (16) eine Nachricht zu senden, die die Anwesenheitsinformation anzeigt.

10. Zellulares Netz (15), das eine Zellen-Verwaltungsentität (11) in einem zellularen Netz (15) enthält, die geeignet ist, eine erste Funkzelle (13) zu verwalten, die in einem aktiven Zustand oder in einem inaktiven Zustand sein kann;
wobei das zellulare Netz enthält:
- eine andere Zellenverwaltungsentität (12), die geeignet ist, mindestens eine zweite Funkzelle (14) zu verwalten; und
- mindestens eine Steuerentität (16), die geeignet ist, die Zellenverwaltungsentität der ersten Funkzelle zu steuern;
wobei die ersten und zweiten Funkzellen sich zumindest teilweise geographisch überlappen;
wobei die Zellenverwaltungsentität der ersten Zelle enthält:
- einen Empfänger (53), der geeignet ist, eine Aktivierungs- bzw. Deaktivierungsnachricht von der Steuerentität zu empfangen; und
- eine Steuerung (54), die geeignet ist, die erste Zelle in einen aktiven Zustand bzw. einen inaktiven Zustand zu versetzen;
- und eine Steuerentität nach Anspruch 8, die für ein Endgerät nach Anspruch 9 geeignet ist.

11. Computerprogramm, das dazu bestimmt ist, in eine Steuerentität (16) nach Anspruch 8 installiert zu werden, das Anweisungen enthält, die das Verfahren nach Anspruch 1 bei einer Ausführung des Programms durch Verarbeitungseinrichtungen der Steuerentität durchführen können.

## Claims

1. Control method in a cellular network (15), comprising:
- a first cell management entity (11) suitable for managing a first radio cell (13) which can be in an active state or in an inactive state;
- a second cell management entity (12) suitable for managing at least one second radio cell (14); and
- at least one control entity (16) suitable for controlling the first cell management entity;
said first and second radio cells at least partially overlapping geographically;
said method comprising the following steps in the control entity:
/1/ obtaining (21) a presence indication relating to the presence of at least one terminal (50) in a radio vicinity area of the first cell;
/2/ deciding (23, 24) a state of activity of the first cell according to said presence indication;
said radio vicinity area of the first cell comprising at least the second cell.

2. Control method according to Claim 1, in which, the control entity (16) decides a change of activity state from an inactive state to an active state for the first cell (13), when the presence indication indicates that at least one terminal (50) is present in the radio vicinity area of the first cell.

3. Control method according to Claim 1, in which, the control entity (16) decides a change of activity state from an active state to an inactive state for the first cell (13), when the presence indication indicates that no terminal (50) is present in the radio vicinity area of the first cell.

4. Control method according to Claim 1, in which the control entity (16) receives a presence indication message, respectively an absence indication message, from a terminal (50) detecting that it is entering into, respectively leaving, the radio vicinity area of the first cell (13).

5. Control method according to Claim 4, in which the control entity (16) is responsible for both the first cell and the second cell, and in which the presence or absence indication message is transmitted by the terminal to said control entity (16).

6. Control method according to Claim 4, in which another control entity is responsible for controlling the second cell (14), and in which the presence or absence indication message is transmitted by the terminal (50) to said other control entity, said other control entity transmitting said indication message to the control entity (16) responsible for managing the first cell.

7. Method for controlling a terminal (50) in a cellular network (15) comprising:
- a first cell management entity (11) suitable for managing a first radio cell (13) which can be in an active state or in an inactive state;
- a second cell management entity (12) suitable for managing at least one second radio cell (14); and
- at least one control entity (16) suitable for controlling the first cell management entity;
said first and second radio cells at least partially overlapping geographically;
said method comprising the following steps in the terminal, said terminal having indications concerning a radio vicinity area of the first cell;
/1/ receiving a radio signal from at least one cell of the cellular network;
/2/ determining a presence indication indicating if the terminal is in the radio vicinity area of the first cell on the basis of said indications and of the received radio signal; and
/3/ transmitting to the control entity (16) a message indicating said presence indication.

8. Control entity (16) in a cellular network (15) comprising:
- a first cell management entity (11) suitable for managing a first radio cell (13) which can be in an active state or in an inactive state;
- a second cell management entity (12) suitable for managing at least one second radio cell (14); and
- at least one control entity (16) suitable for controlling the first cell management entity;
said first and second radio cells at least partially overlapping geographically;
said control entity comprising:
- an obtaining unit (51) suitable for obtaining a presence indication relating to the presence of at least one terminal in a radio vicinity area of the first cell;
- a decision unit (52) for deciding a state of activity of the first cell according to said presence indication;
said radio vicinity area of the first cell comprising at least the second cell.

9. Terminal (50) suitable for operating in a cellular network (15) comprising:
- a first cell management entity (11) suitable for managing a first radio cell (13) which can be in an active state or in an inactive state;
- a second cell management entity (12) suitable for managing at least one second radio cell (14); and
- at least one control entity (16) suitable for controlling the first cell management entity;
said first and second radio cells at least partially overlapping geographically;
said terminal comprising:
- a memory (55) storing indications relating to a radio vicinity area of the first cell;
- a receiver (56) suitable for receiving a radio signal from at least one cell;
- a determination unit (57) suitable for determining a presence indication indicating if the terminal is in the radio vicinity area of the first cell on the basis of said indications and of the received radio signal; and
- a transmitter (58) suitable for transmitting to the control entity (16) a message indicating said presence indication.

10. Cellular network (15) comprising a cell management entity (11) in a cellular network (15) suitable for managing a first radio cell (13) which can be in an active state or in an inactive state;
said cellular network comprising:
another cell management entity (12) suitable for managing at least one second radio cell (14); and
- at least one control entity (16) suitable for controlling the cell management entity of the first radio cell;
said first and second radio cells at least partially overlapping geographically;
the cell management entity of the first cell comprising:
- a receiver (53) suitable for receiving an activation, respectively deactivation, message from the control entity; and
- a controller (54) suitable for setting the first cell to an active state, respectively to an inactive state;
- and a control entity according to Claim 8 suitable for a terminal according to Claim 9.

11. Computer program intended to be installed in a control entity (16) according to Claim 8, comprising instructions suitable for implementing the method according to Claim 1, when the program is run by processing means of the control entity.
